# EUROPEAN PATENT SPECIFICATION

(11) **EP 3 002 607 B1**
(45) Date of publication and mention of the grant of the patent: **16.05.2018**
(21) Application number: 15187713.1
(22) Date of filing: 30.09.2015
(51) Int. Cl.: G01S 11/06, G01S 5/12, G01S 5/14, G01S 5/00, G01S 5/02, G01S 13/74, G01S 13/75, G01S 13/87

(54) **OBJECT POSITIONING METHOD AND DEVICE THEREOF**
OBJEKTPOSITIONIERUNGSVERFAHREN UND VORRICHTUNG DAFÜR
PROCÉDÉ DE POSITIONNEMENT D'OBJET ET DISPOSITIF ASSOCIÉ

(30) Priority: 30.09.2014 CN 201410521145
(43) Date of publication of application: 06.04.2016
(73) Proprietor: Xiaomi Inc., Haidian District Beijing 100085 (CN)
(72) Inventor: LI, Yingjun, 100085 Haidian District (CN); WANG, Li, 100085 Haidian District (CN)
(74) Representative: Reeve, Nicholas Edward

(56) References cited:
- DE-U1-202010 006 043
- US-A1- 2005 035 862
- US-A1- 2011 018 769
- US-A1- 2012 019 362
- US-A1- 2013 214 907
- JIAHAO WANG ET AL: "RFID-enabled tracking in flexible assembly line", THE INTERNATIONAL JOURNAL OF ADVANCED MANUFACTURING TECHNOLOGY, SPRINGER, BERLIN, DE, vol. 46, no. 1-4, 1 June 2009 (2009-06-01) , pages 351-360, XP019776911, ISSN: 1433-3015

## Description

### TECHNICAL FIELD

The present disclosure generally relates to the field of wireless communication application, and more particularly, to an object positioning method and device thereof.

### BACKGROUND

In daily life, users often cannot find their house keys, wallets or articles tidied long time ago, which causes great inconvenience to users in life.

In order to effectively search out required articles, users may manually record on a notebook the place for storing an article so as to locate the same. For example, users manually record the place for storing an article when it is stored; when they want to search the article, they may search out the place for storing the article according to the record on the notebook.

In the process of realizing the present disclosure, it is found that related technologies at least have following disadvantages: users need manually record on a notebook the place for storing an article when the article is positioned by recording its storage place, which is cumbersome in operation and poor in reliability.

Object location systems are known from US2005/035862, US2011/018769 and the paper by Jiahao Wang et al entitled "RFID-enabled tracking in flexible assembly line".

### SUMMARY OF THE INVENTION

In order to solve the problem in related technologies where users need to manually record on a notebook the place for storing articles, which is cumbersome in operation, the present disclosure provides an object positioning method and device thereof, as defined in the appended claims.

According to the first aspect of the embodiments of the present disclosure, an object positioning method is provided. The method is applied to a master positioning device in a system of a master positioning device and at least two slave positioning devices, and comprises: transmitting a beam outward with a beam angle of 360°; receiving a feedback signal sent from an object, the feedback signal being signal sent from an electronic tag provided on the object after receiving the beam, and the feedback signal being related to intensity of the beam when the electronic tag receives the beam; and determining a position of the object relative to the positioning device according to the feedback signal comprising: calculating a distance between the object and the master positioning device according to beam intensity relating to the feedback signal; receiving a distance, which is sent from each of at least two slave positioning devices, between the object and the slave positioning device; and calculating a position of the object relative to the master positioning device according to a relative position between each of the at least two slave positioning devices and the master positioning device as well as a distance, which is measured from each slave positioning device , between the slave positioning device and the object, by: determining a circle for each of the master and at least two slave positioning devices respectively by taking each positioning device as a center and taking the distance, determined by each positioning device, between the positioning device and the object as a radius; determining, according to the relative position between the at least two slave positioning devices and the master positioning device as well as the distance, measured by each slave positioning device, between the slave positioning device and the object, one or more intersection points on the master positioning device circle; a) taking, if there is an intersection point on the master positioning device circle, created by the intersection of at least two slave positioning device circles, the position of the intersection point as the position of the object relative to the master positioning device; b) determining, if there is no intersection point on the master positioning device circle created by the intersection of at least two slave positioning device circles, at least two intersection points created by the intersection of the master positioning device circle and at least one of the at least two slave positioning device circles; c) taking, if there are such two intersection points, and the arc distance on the master positioning device circle between the two intersection points is less than a predetermined arc threshold, a position of either of the two intersection points as the position of the object relative to the master positioning device; d) determining, if there are two such intersection points, and the arc distance on the master positioning device circle is greater than the predetermined arc threshold, that there is a first slave positioning device circle intersecting with the master positioning device circle, and a second slave positioning device circle not intersecting with the master positioning device circle; e) detecting whether there is an intersection point between the first and second slave positioning device circles, such that an arc between the intersection point on the first and second slave positioning device circles and the intersection point on the master positioning device circle is less than the predetermined arc threshold; and determining, if there is such an intersection point, the position of the intersection point on the circle of the master positioning device as the position of the object relative to the master positioning device.

According to the second aspect of the embodiments of the present disclosure, an object positioning device is provided. The device is a master positioning device in a system of a master positioning device and at least two slave positioning devices, and comprises: a transmitting module, configured to transmit a beam outward with a beam angle of 360°; a receiving module, configured to receive feedback signal sent from an object, the feedback signal being signal sent from an electronic tag provided on the object after receiving the beam, and the feedback signal being related to intensity of the beam when the electronic tag receives the beam; and a determining module, configured to determine a position of the object relative to the positioning device according to the feedback signal; the determining module comprising: a second calculating submodule, configured to calculate a distance between the object and the master positioning device according to beam intensity relating to the feedback signal; a receiving submodule, configured to receive from each of at least two slave positioning devices, a distance between the object and the slave positioning device; and a third calculating submodule, configured to calculate a position of the object relative to the master positioning device according to a relative position between each of the at least two slave positioning devices and the master positioning device as well as a distance, which is measured from each slave positioning device, between the slave positioning device and the object; and wherein: the third calculating submodule comprises: a second determining submodule, configured to determine a circle for each of the master and at least two slave positioning devices respectively by taking each positioning device as a center and taking the distance, determined by each positioning device, between the positioning device and the object as a radius; determining, according to the relative position between the at least two slave positioning devices and the master positioning device as well as the distance, measured by each slave positioning device, between the slave positioning device and the object, one or more intersection points on the master positioning device circle; a) a third determining submodule, configured to take, if there is an intersection point on the master positioning device circle, created by the intersection of at least two slave positioning device circles, the position of the intersection point as the position of the object relative to the master positioning device; a fourth determining submodule, configured to: b) determine, if there is no intersection point on the master positioning device circle created by the intersection of at least two slave positioning device circles, at least two intersection points created by the intersection of the master positioning device circle and at least one of the at least two slave positioning device circles; c) take, if there are such two intersection points, and the arc distance on the master positioning device circle between the two intersection points is less than a predetermined arc threshold, a position of either of the two intersection points as the position of the object relative to the master positioning device; d) determine, if there are two such intersection points, and the arc distance on the master positioning device circle is greater than the predetermined arc threshold, that there is a first slave positioning device circle intersecting with the master positioning device circle, and a second slave positioning device circle not intersecting with the master positioning device circle, e) detect whether there is an intersection point between the first and second slave positioning device circles, such that an arc between the intersection point on the first and second slave positioning device circles and the intersection point on the master positioning device circle is less than the predetermined arc threshold; and determining, if there is such an intersection point, the position of the intersection point on the circle of the master positioning device as the position of the object relative to the master positioning device.

According to the third aspect of the embodiments of the present disclosure, an object positioning system is provided. The system comprises an object, a master positioning device and at least two slave positioning devices, the object is provided with an electronic tag for receiving a beam sent by the positioning device, and wherein the master positioning device is the object positioning device according to the second aspect.

The present disclosure also provides a computer program, which when executed on the processor of a terminal performs the above method.

The technical solution according to embodiments of the disclosure may have the following beneficial effects: a beam is transmitted according to a preset mode, feedback signal sent by an object is received, and a position of the object relative to the positioning device is determined according to the feedback signal; since articles are positioned by means of the positioning device, thus the problem that users need to manually record on a notebook the place for storing articles, which is cumbersome in operation and poor in reliability, can be solved; and the effect of improving the convenience for positioning object can be achieved.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a schematic diagram illustrating an implementation environment involved in an object positioning method according to a part of exemplary embodiments.
Fig. 2 is a flow chart illustrating an object positioning method according to an first example.
Fig. 3A is a flow chart illustrating an object positioning method according to a first example .
Fig. 3B is a schematic diagram illustrating that beam is transmitted out from a positioning device according to the first example.
Fig. 3C is a schematic diagram illustrating that an object is positioned by a positioning device according to the first example.
Fig. 4A is a flow chart illustrating an object positioning method according to an embodiment of the invention.
Fig. 4B is a schematic diagram illustrating that beam is transmitted out from a positioning device according to the embodiment of the invention.
Fig. 4C is a schematic diagram illustrating that an object is positioned by a positioning device according to the embodiment of the invention.
Fig. 4D is a schematic diagram illustrating that an object is positioned by a positioning device according to the embodiment of the invention.
Fig. 4E is a schematic diagram illustrating that an object is positioned by a positioning device according to the embodiment of the invention.
Fig. 5 is a block diagram illustrating an object positioning device according to embodiments of the invention.
Fig. 6 is a block diagram illustrating an object positioning device according to an example.
Fig. 7 is a block diagram illustrating an object positioning device according to embodiments of the invention.
Fig. 8 is a block diagram illustrating an object positioning system according to an example.
Fig. 9 is a block diagram illustrating an object positioning system according to embodiments of the invention.
Fig. 10 is a block diagram illustrating a device for object positioning according to embodiments of the invention.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise specified. The implementations set forth in the following description of exemplary embodiments do not cover all implementations consistent with the disclosure. Instead, they are merely examples of apparatuses and methods consistent with aspects related to the disclosure as recited in the appended claims.

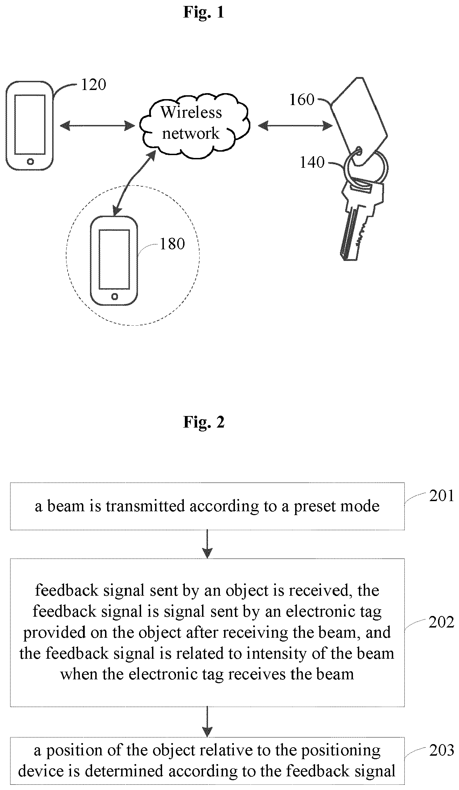

Fig. 1 is a schematic diagram illustrating an implementation environment involved in an object positioning method according to a part of exemplary embodiments. As shown in Fig. 1, the implementation environment may include at least one positioning device 120 and an object 140.

The positioning device 120 may be electronic equipment provided with a positioning module. The electronic equipment may be a smart mobile phone, a tablet computer, a smart television, an e-book reader, a router, a multimedia player, a laptop portable computer, a desktop computer or the like.

The positioning device 120 may be connected to the object 140 through a wireless network such as Wi-Fi (Wireless-Fidelity) and Bluetooth, etc.

The object 140 may be an article provided with an electronic tag 160 which may be a passive tag or an active tag.

The implementation environment may also include a positioning device 180, and the positioning device 120 may be combined together with the positioning device 180 for positioning the object 140.

Fig. 2 is a flow chart illustrating an object positioning method according to a a first example. As shown in Fig. 2, the object positioning method is applied to the positioning device 120 in the implementation environment as shown in Fig. 1, including following steps.

In Step 201, a beam is transmitted according to a preset mode.

In Step 202, feedback signal sent by an object is received, the feedback signal is signal sent by an electronic tag provided on the object after receiving the beam, and the feedback signal is related to intensity of the beam when the electronic tag receives the beam.

In Step 203, a position of the object relative to the positioning device is determined according to the feedback signal.

To sum up, in the object positioning method provided by the example of the present disclosure is implemented by, a beam is transmitted according to a preset mode, feedback signal sent by an object is received, and a position of the object relative to the positioning device is determined according to the feedback signal; since articles are positioned by means of the positioning device, thus the problem that users need to manually record on a notebook the place for storing articles, which is cumbersome in operation, can be solved; and the effect of improving the convenience and reliability for positioning object can be achieved.

In a usage scenario, users may employ a positioning device to position an object conveniently and quickly. Please refer to following examples for concrete implementation. The following part of the description does not describe part of the claimed invention.

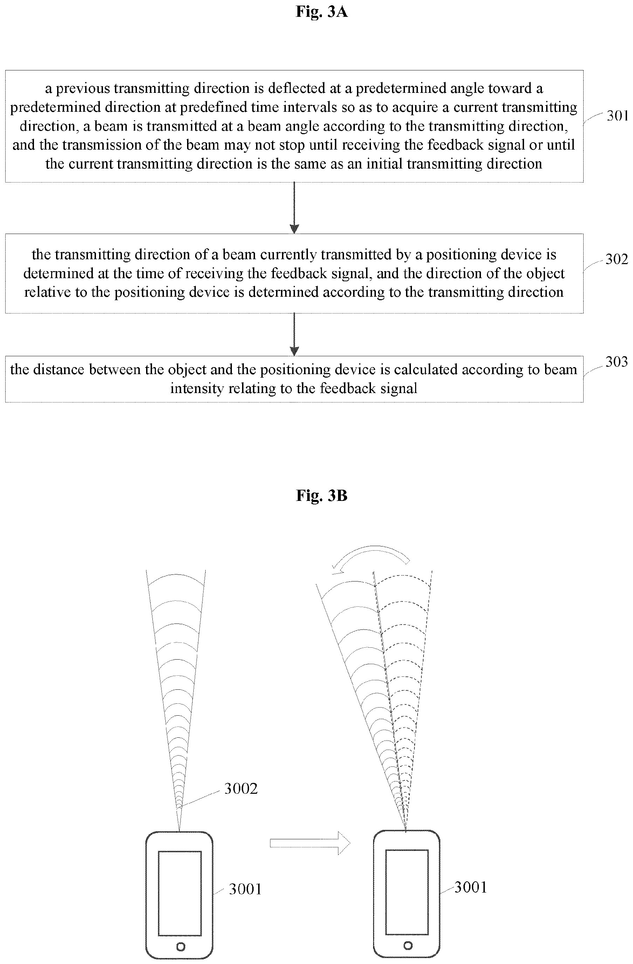

Fig. 3A is a flow chart illustrating an object positioning method according to the first example. As shown in Fig. 3A, the object positioning method is applied to the positioning device 120 in the implementation environment as shown in Fig. 1, including following steps.

In Step 301, a previous transmitting direction is deflected by a predetermined angle toward a predetermined direction at predefined time intervals so as to acquire a current transmitting direction, a beam is transmitted at a beam angle according to the transmitting direction, and the transmission of the beam may not stop until the feedback signal is received or until the current transmitting direction is the same as an initial transmitting direction.

An initial transmitting direction is determined at the time of transmitting a beam, and a previous transmitting direction is deflected by a predetermined angle toward a predetermined direction at predefined time intervals so as to acquire a current transmitting direction. The predetermined direction may be a clockwise direction or an anti-clockwise direction. And the angle difference value between transmitting directions of each two adjacent transmissions is the same.

Alternatively, the predetermined angle may be a beam angle of a beam.

When the predetermined angle may be a beam angle of a beam, a previous transmitting direction is deflected by a predetermined angle toward a predetermined direction so as to acquire a current transmitting direction, i.e., it may be interpreted as below: the ith transmitting direction is determined during transmitting a beam for the ith time, wherein when i>1, the angle difference value between the ith transmitting direction and the (i-1)th transmitting direction is equal to a beam angle of the beam, and the ith transmitting direction is at a predetermined side of the (i-1)th transmitting direction. Herein, i is a natural number greater than 0.

Generally, the shape of a transmitted beam is a sector, and a beam angle is a central angle of the sector. In practical application, in order to ensure the positioning accuracy, a beam angle of a beam may be set to be relatively small (for example, 3° or 5°); the smaller a beam angle is, the higher the positioning accuracy is. It should be noted that the size of a beam angle is not limited in the example. However, in order to shorten the object positioning time, a relatively large beam angle of a beam may be set. Therefore, in actual positioning process, a beam angle with a suitable size may be determined in combination with positioning accuracy and positioning time.

During transmitting a beam for the first time, any direction may be selected as a transmitting direction for transmitting a beam. Alternatively, the front of a positioning device may be selected as a transmitting direction for transmitting a beam for the first time.

During scanning, the transmitting direction may be adjusted clockwise or anticlockwise. For example, the transmitting direction for transmitting a beam for the second time may be determined, on the basis of the transmitting direction for transmitting a beam for the first time, on the left side (i.e., adjusting the transmitting direction anticlockwise) or the right side (i.e., adjusting the transmitting direction clockwise) of the transmitting direction for transmitting a beam for the first time.

If the transmitting direction for transmitting a beam for the second time is determined at a predetermined side of the transmitting direction for transmitting a beam for the first time, all the transmitting directions for transmitting a beam after the second time are determined at the predetermined side of the transmitting direction for transmitting a beam for the previous time. That is to say, if the transmitting direction for transmitting a beam for the second time is determined on the left side of the transmitting direction for transmitting a beam for the first time, all the transmitting directions for transmitting a beam after the second time are determined on the left side of the transmitting direction for transmitting a beam for the previous time, for example, the transmitting direction for transmitting a beam for the third time is determined on the left side of the transmitting direction for transmitting a beam for the second time, and the transmitting direction for transmitting a beam for the fourth time is determined on the left side of the transmitting direction for transmitting a beam for the third time. If the transmitting direction for transmitting a beam for the second time is determined on the right side of the transmitting direction for transmitting a beam for the first time, all the transmitting directions for transmitting a beam after the second time are determined on the right side of the transmitting direction for transmitting a beam for the previous time, for example, the transmitting direction for transmitting a beam for the third time is determined on the right side of the transmitting direction for transmitting a beam for the second time, and the transmitting direction for transmitting a beam for the fourth time is determined on the right side of the transmitting direction for transmitting a beam for the third time.

Alternatively, the beam angle for transmitting a beam every time is the same in size, and the angle difference value between the transmitting direction for transmitting a beam for the second time and the transmitting direction for transmitting a beam for the first time is equal to the beam angle of a beam, i.e., one side of a sector corresponding to the beam transmitted for the second time is coincident with one side of a sector corresponding to the beam transmitted for the first time.

For example, as shown in Fig. 3B, which is a schematic diagram illustrating beam is transmitted out from a positioning device according to the first example. As shown in Fig.3B,when a positioning device 3001 transmits a beam for the first time, it transmits a beam with a beam angle 3002 forwardly. When transmitting the beam for the second time, the positioning device determines the transmitting direction to be on left side of the transmitting direction of the first time and transmits a beam with also the beam angle 3002along the transmitting direction. Moreover the right side of the sector corresponding to the beam transmitted for the second time is tangent to the left side of a sector corresponding to the beam transmitted for the first time.

Alternatively, at the time of transmitting a beam, in order to ensure positioning an object, a positioning device may conduct an omni-directional scanning (i.e. a 360° scanning) according to the transmitted beam, i.e., at the time of transmitting a beam, a previous transmitting direction is deflected by a predetermined angle toward a predetermined direction at predefined time intervals so as to acquire a current transmitting direction, a beam is transmitted along the current transmitting direction and the transmission of the beam may not stop until the current transmitting direction is the same as an initial transmitting direction. Alternatively, feedback signal may be sent from an article to be positioned, it is also possible to stop transmitting a beam upon receiving the feedback signal.

After determining a transmitting direction, a positioning device may transmit a beam outward with a beam angle according to this transmitting direction.

In Step 302, the transmitting direction of a beam currently transmitted by a positioning device is determined at the time of receiving the feedback signal, and the direction of the object relative to the positioning device is determined according to the transmitting direction.

The object is provided with an electronic tag which may feed back, after receiving a beam transmitted by the positioning device, corresponding feedback signal to the positioning device according to the intensity of the received beam. The electronic tag may be an active tag or a passive tag, to which the example makes no restriction.

After receiving the feedback signal, the positioning device stops transmitting a beam outward and determines the direction of transmitting a beam for the last time as the direction of an object to be positioned. It should be noted that a direction determined by the positioning device is a direction relative to the positioning device, for example, 1 o'clock direction, 3 o'clock direction or 6 o'clock direction of the positioning device and so on.

Apparently, after receiving the feedback signal, the positioning device may also continue transmitting a beam outward, but it may be necessary to determine the direction of an object to be positioned as the transmitting direction at the time of receiving the feedback signal.

In Step 303, the distance between the object and the positioning device is calculated according to beam intensity relating to the feedback signal.

The electronic tag may feed back corresponding feedback signal to the positioning device according to the intensity of a received beam, and the intensity of a beam may diminish gradually in the propagation process, i.e., the greater the propagation length is, the lower the beam intensity is. In other words, the beam intensity is inversely proportional to the propagation length. Therefore, the positioning device may calculate, according to the beam intensity relating to the feedback signal, the distance between the object and the positioning device.

After acquiring the direction of the object relative to the positioning device and the distance between the object and the positioning device, the positioning device may combine the direction of the object relative to the positioning device with the distance between the object and the positioning device, thus acquiring a relative position of the object relative to a certain direction of the positioning device.

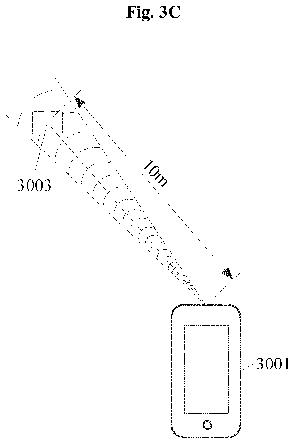

For example, as shown in Fig. 3C, which is a schematic diagram illustrating that an object is positioned by a positioning device according to the first example, it may be acquired that an object 3003 is 10 meters at the front left of a positioning device 3001 after the positioning device 3001 combines the direction of the object 3003 acquired relative to the positioning device 3001 with the distance between the object 3003 and the positioning device 3001.

To sum up, in the object positioning method illustrated in the first example, a beam is transmitted according to a preset mode, feedback signal sent by an object is received, and a position of the object relative to the positioning device is determined according to the feedback signal; since articles are positioned by means of the positioning device, thus the problem that users need to manually record on a notebook the place for storing articles, which is cumbersome in operation, can be solved; and the effect of improving the convenience and reliability for positioning object can be achieved.

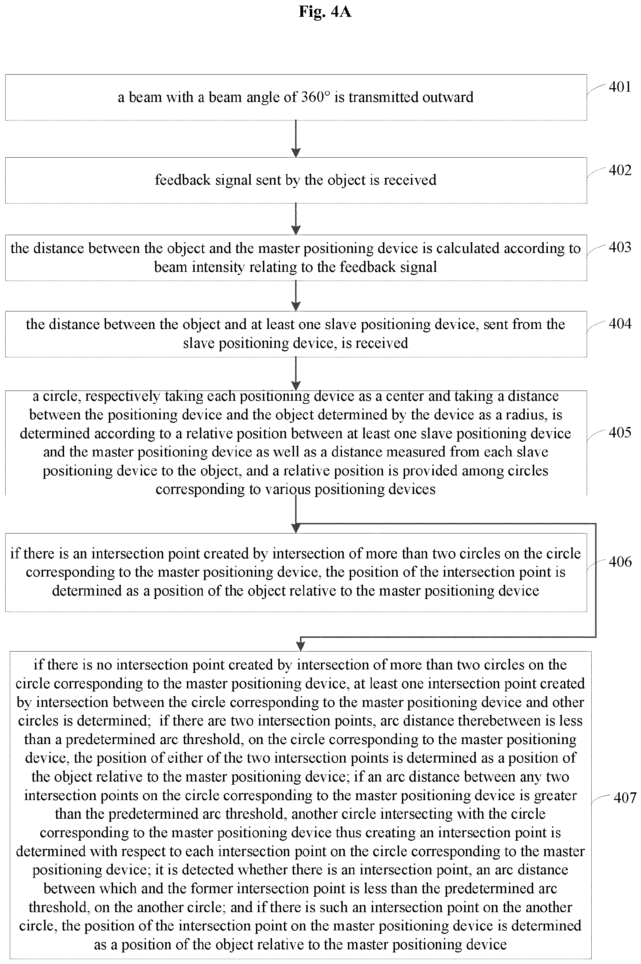

In a usage scenario, users may employ at least two positioning devices to position an object more accurately. The following part of the description falls again under the scope of the appended claims. Fig. 4A is a flow chart illustrating an object positioning method according to a preferred embodiment. As shown in Fig. 4A, the object positioning method is applied to the positioning device 120 in the implementation environment as shown in Fig. 1. The positioning device 120 is a master positioning device among a plurality of positioning devices, and the rest of positioning devices are slave positioning devices, including following steps.

In Step 401, a beam with a beam angle of 360° is transmitted outward.

At the time of positioning an object, at least three positioning devices transmit beams outward with a beam angle of 360°.

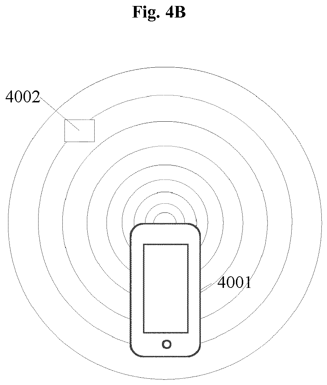

For example, as shown in Fig. 4B, which is a schematic diagram illustrating that beam is transmitted out from a positioning device according to the preferred embodiment, a positioning device transmits beams 4001 outward with a beam angle of 360°, i.e., the positioning device transmits beams toward all directions. After receiving a beam transmitted by the positioning device 4001, an object 4002 sends feedback signal to the positioning device 4001.

In Step 402, feedback signal sent by the object is received.

The object is provided with an electronic tag which may feed back, after receiving a beam transmitted by the positioning device, corresponding feedback signal to the positioning device according to the intensity of the received beam. The electronic tag may be an active tag or a passive tag, to which the preferred embodiment makes no restriction.

In Step 403, the distance between the object and the master positioning device is calculated according to beam intensity relating to the feedback signal.

The electronic tag may feed back corresponding feedback signal to the positioning device according to the intensity of a received beam, and the intensity of a beam may diminish gradually in the propagation process, i.e., the greater the propagation length is, the lower the beam intensity is. Therefore, the positioning device may calculate, according to the beam intensity relating to the received feedback signal, the distance between the object and the master positioning device.

In Step 404, the distance between the object and at least one slave positioning device, sent from the slave positioning device, is received.

The slave positioning device may also calculate the distance between the object and the slave positioning device according to Step 403. After acquiring the distance, the slave positioning device sends the distance to the master positioning device. The master positioning device receives a distance between each slave positioning device and the object.

In Step 405, a circle, respectively taking each positioning device as a center and taking a distance between the positioning device and the object determined by the device as a radius, is determined according to a relative position between at least one slave positioning device and the master positioning device as well as a distance measured from each slave positioning device to the object, and a relative position is provided among circles corresponding to various positioning devices.

The relative position between each slave positioning device and the master positioning device is stored in advance in the master positioning device.

After receiving a distance between each slave positioning device and the object, the master positioning device may determine, according to the relative position between each slave positioning device and the master positioning device as well as a distance between each slave positioning device and the object measured by the device, a circle respectively taking each positioning device as a center and taking the distance between each positioning device and the object determined by the device as a radius. The relative position between circles corresponding to each positioning device is the same as the relative position between each slave positioning device and the master positioning device as being stored in advance in the master positioning device.

In Step 406, if there is an intersection point created by intersection of more than two circles on the circle corresponding to the master positioning device, the position of the intersection point is determined as a position of the object relative to the master positioning device.

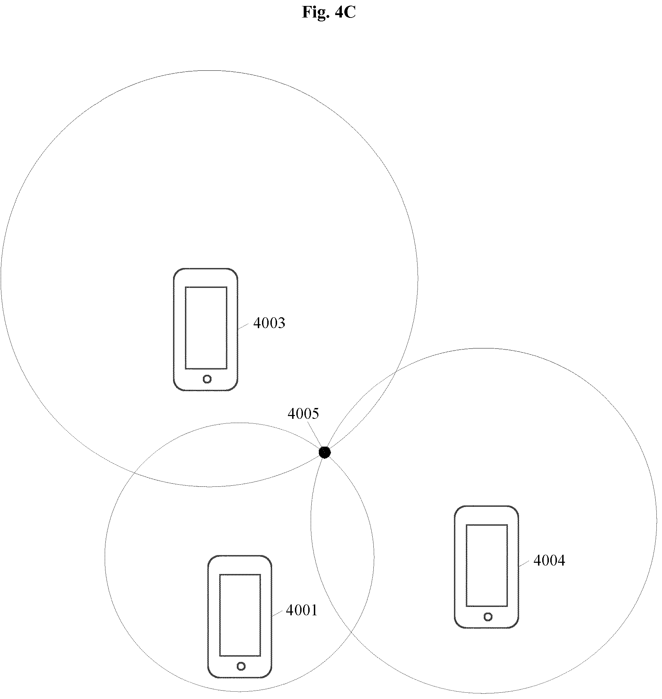

For example, as shown in Fig. 4C, which is a schematic diagram illustrating that an object is positioned by a positioning device according to the preferred embodiment, a circle determined by a master positioning device 4001 and circles determined by slave positioning devices 4003 and 4004 intersect at a point 4005. At the moment, the master positioning device determines the intersection point 4005 as a position of the object relative to the master positioning device.

In Step 407, if there is no intersection point created by intersection of more than two circles on the circle corresponding to the master positioning device, at least one intersection point created by intersection between the circle corresponding to the master positioning device and other circles is determined; if there are two intersection points, arc distance therebetween is less than a predetermined arc threshold, on the circle corresponding to the master positioning device, the position of either of the two intersection points is determined as a position of the object relative to the master positioning device; if an arc distance between any two intersection points on the circle corresponding to the master positioning device is greater than the predetermined arc threshold, another circle intersecting with the circle corresponding to the master positioning device thus creating an intersection point is determined with respect to each intersection point on the circle corresponding to the master positioning device; it is detected whether there is an intersection point, an arc distance between which and the former intersection point is less than the predetermined arc threshold, on the another circle; and if there is such an intersection point on the another circle, the position of the intersection point on the master positioning device is determined as a position of the object relative to the master positioning device.

In the positioning process, positioning error may be resulted from different sizes of different objects to be positioned, i.e., when a circle is determined according to the positioning device as well as the distance between the positioning device and an object, the determined circle is usually provided with some errors. Therefore, the predetermined arc threshold may be set for accurate positioning in the case of errors.

In the first case, if there is no intersection point, created by intersection of more than two circles, on the circle corresponding to the master positioning device, at least one intersection point created by intersection between the circle corresponding to the master positioning device and other circles is determined; and if there are two intersection points, arc distance therebetween is less than the predetermined arc threshold, on the circle corresponding to the master positioning device, the position of either of the two intersection points is determined as a position of the object relative to the master positioning device. Namely, when the arc distance between two intersection points on the circle corresponding to the master positioning device is less than the predetermined arc threshold, a positioning requirement is met, and the position of either of the two intersection points is determined as a position of the object relative to the master positioning device.

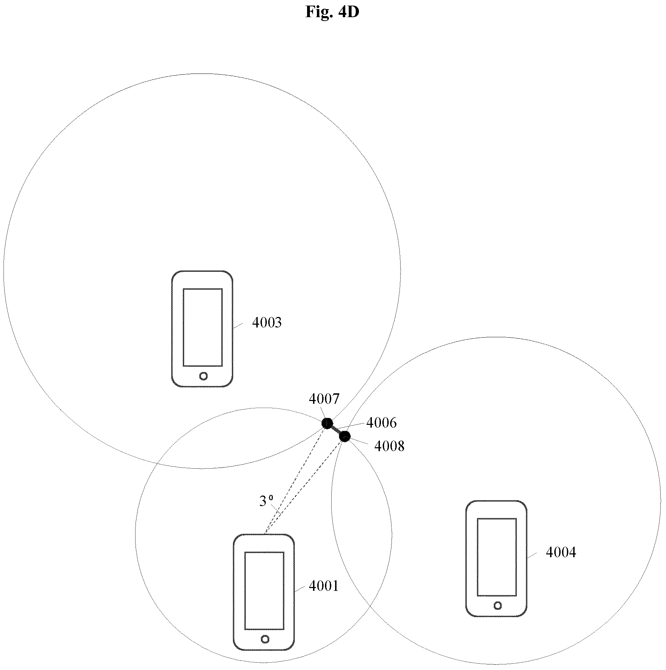

For example, as shown in Fig. 4D, which is a schematic diagram illustrating that an object is positioned by a positioning device according to the preferred embodiment, the predetermined arc threshold is 5°. The circle corresponding to the master positioning device 4001 and the circle corresponding to the slave positioning devices 4003 intersect at a point 4007. The circle corresponding to the master positioning device 4001 and the circle corresponding to the slave positioning device 4004 intersect at a point 4008. At the moment, an arc 4006 between the intersection point 4007 and the intersection point 4008 is 3° (smaller than 5°). The master positioning device determines the position of the intersection point 4007 as a position of the object relative to the master positioning device.

In the second case, if there is no intersection point, created by intersection of more than two circles, on the circle corresponding to the master positioning device, at least one intersection point created by intersection between the circle corresponding to the master positioning device and other circles is determined; if an arc distance between any two intersection points on the circle corresponding to the master positioning device is greater than the predetermined arc threshold, another circle intersecting with the circle corresponding to the master positioning device thus creating an intersection points is determined with respect to each intersection point on the circle corresponding to the master positioning device; it is detected whether there is an intersection point, an arc distance between which and the former intersection point is less than the predetermined arc threshold, on the another circle; and if there is such an intersection point on the another circle, the position of the intersection point on the master positioning device is determined as a position of the object relative to the master positioning device.

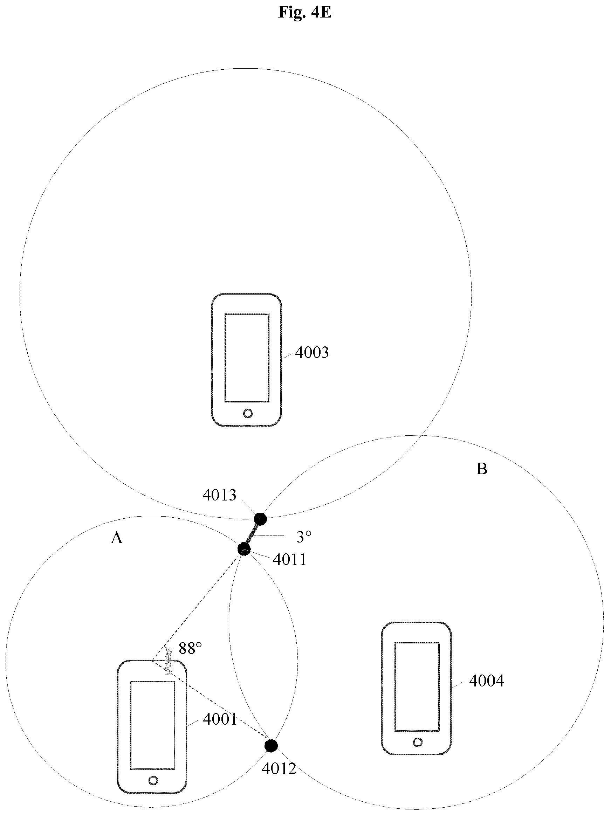

For example, as shown in Fig. 4E, which is a schematic diagram illustrating that an object is positioned by a positioning device according to the preferred embodiment, the predetermined arc threshold is 5°. The circle A corresponding to the master positioning device 4001 and circles corresponding to other positioning devices intersect at points 4011 and 4012. However, the arc between the intersection point 4011 and the intersection point 4012 is 88°, which is greater than the predetermined arc threshold (5°). Therefore, the intersection point 4011 may be selected, and another circle B intersecting with the intersection point 4011 is determined, then the arc (3°) between an intersection point 4013 on the circle B and the intersection point 4011 is determined to be smaller than the predetermined arc threshold (5°). Therefore, the position of the intersection point 4011 is determined as a position of the object relative to the master positioning device 4001.

To sum up, in the object positioning method provided by the preferred embodiment of the present disclosure, a beam is transmitted according to a preset mode, feedback signal sent by an object is received, and a position of the object relative to the positioning device is determined according to the feedback signal; articles are positioned by means of the positioning device, thus the problem that users need to manually record on a notebook the place for storing articles, which is cumbersome in operation, can be solved; and the effect of improving the convenience and reliability for positioning articles can be achieved.

According to the object positioning method provided by the embodiments of the present disclosure, an object is positioned by a system of a master positioning device and at least two slave positioning devices, thus the problem of a single positioning device with lower positioning accuracy can be solved, and the effect of improving object positioning accuracy can be achieved.

The following gives the embodiment of the device in the present disclosure, which may be configured to implement the preferred embodiment of the method in the present disclosure. Please refer to the embodiment of the method in the present disclosure with regard to those details undisclosed in the embodiment of the device in the present disclosure.

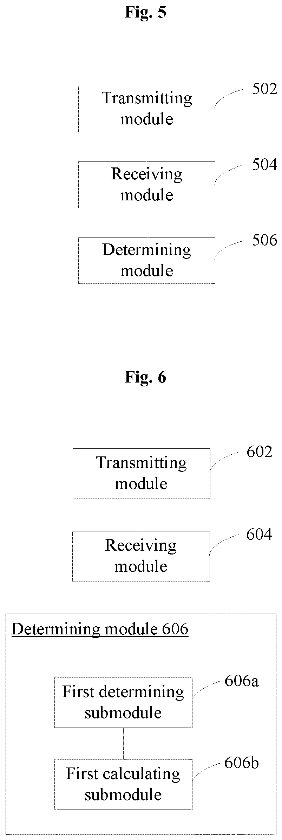

Fig. 5 is a block diagram illustrating an object positioning device according to an exemplary embodiment. As shown in Fig. 5, the object positioning device is applied to the positioning device 120 in the implementation environment as shown in Fig. 1, and the object positioning device may include but is not limited to: a transmitting module 502, a receiving module 504 and a determining module 506.

The transmitting module 502 is configured to transmit a beam outward with a beam angle of 360°.

The receiving module 504 is configured to receive feedback signal sent by an object; the feedback signal is signal sent by an electronic tag provided on the object after receiving the beam, and the feedback signal is related to intensity of the beam when the electronic tag receives the beam.

The determining module 506 is configured to determine a position of the object relative to the positioning device according to the feedback signal.

To sum up, with the object positioning device provided by embodiments of the present disclosure, a beam is transmitted outward with a beam angle of 360°, feedback signal sent by an object is received, and a position of the object relative to the positioning device is determined according to the feedback signal; articles are positioned by means of the positioning device, thus the problem that users need to manually record on a notebook the place for storing articles, which is cumbersome in operation, can be solved, and the effect of improving the convenience and reliability for positioning object can be achieved.

Fig. 6 is a block diagram illustrating the object positioning device according to another example.

The following part of the description does not describe part of the claimed invention. As shown in Fig. 6, the object positioning device is applied to the positioning device 120 in the implementation environment as shown in Fig. 1. The object positioning device may include but is not limited to: a transmitting module 602, a receiving module 604 and a determining module 606.

The transmitting module 602 is configured to transmit a beam according to a preset mode.

The receiving module 604 is configured to receive feedback signal sent by an object; the feedback signal is signal sent by an electronic tag provided on the object after receiving the beam, and the feedback signal is related to intensity of the beam when the electronic tag receives the beam.

The determining module 606 is configured to determine a position of the object relative to the positioning device according to the feedback signal.

In a possible example, the transmitting module 602 is configured to:
deflect a previous transmitting direction by a predetermined angle toward a predetermined direction at predefined time intervals so as to acquire a current transmitting direction, transmit the beam along the current transmitting direction until the feedback signal is received, or until the current transmitting direction is the same as an initial transmitting direction.

In a possible example, the determining module 606 may include: a first determining submodule 606a and a first calculating submodule 606b.

The first determining submodule 606a is configured to determine the transmitting direction of a beam currently transmitted by the positioning device at the time of receiving the feedback signal, and to determine the direction of the object relative to the positioning device according to the transmitting direction.

The first calculating submodule 606b is configured to calculate the distance between the object and the positioning device according to beam intensity relating to the feedback signal.

To sum up, with the object positioning device provided by examples of the present disclosure, a beam is transmitted according to a preset mode, feedback signal sent by an object is received, and a position of the object relative to the positioning device is determined according to the feedback signal; articles are positioned by means of the positioning device, thus the problem that users need to manually record on a notebook the place for storing articles, which is cumbersome in operation, can be solved, and the effect of improving the convenience and reliability for positioning object can be achieved.

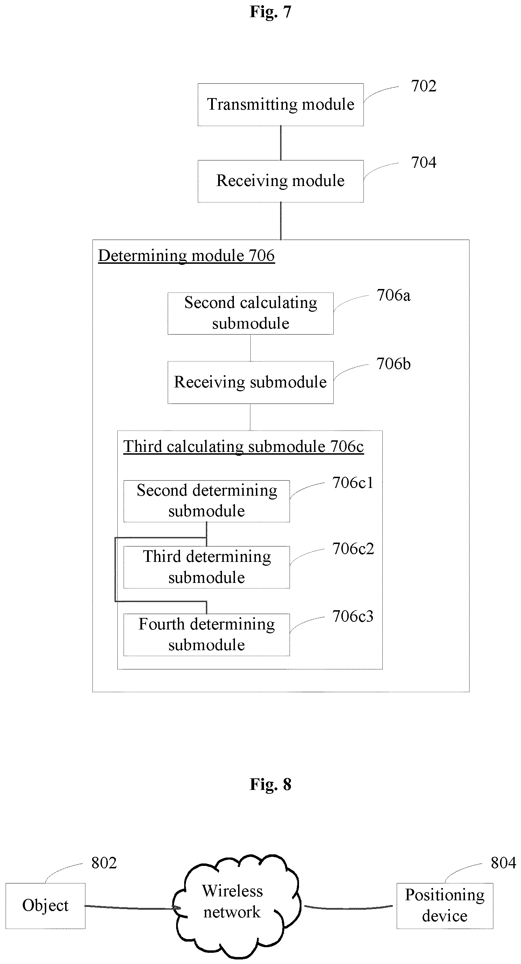

The following part of the description falls again under the scope of the appended claims. Fig. 7 is a block diagram illustrating the object positioning device according to a further exemplary embodiment. As shown in Fig. 7, the object positioning device is applied to the positioning device 120 in the implementation environment as shown in Fig. 1. The object positioning device may include but is not limited to: a transmitting module 702, a receiving module 704 and a determining module 706.

The transmitting module 702 is configured to transmit a beam according to a preset mode.

The receiving module 704 is configured to receive feedback signal sent by an object; the feedback signal is signal sent by an electronic tag provided on the object after receiving the beam, and the feedback signal is related to intensity of the beam when the electronic tag receives the beam.

The determining module 706 is configured to determine a position of the object relative to the positioning device according to the feedback signal.

In a possible embodiment, the transmitting module 702 is configured to transmit a beam with a beam angle of 360°outward.

In a possible embodiment, the positioning device is a master positioning device, and the determining module 706 may include: a second calculating submodule 706a, a receiving submodule 706b and a third calculating submodule 706c.

The second calculating submodule 706b is configured to calculate the distance between the object and the master positioning device according to beam intensity relating to the feedback signal.

The receiving submodule 706b is configured to receive the distance, which is sent from at least one slave positioning device, between the object and the slave positioning device.

The third calculating submodule 706c is configured to calculate the position of the object relative to the master positioning device according to a relative position between at least one slave positioning device and the master positioning device as well as a distance, measured by each slave positioning device, between the deice and the object.

In a possible embodiment, the third calculating submodule 706c may include: a second determining submodule 706c1, a third determining submodule 706c2 and a fourth determining submodule 706c3.

The second determining submodule 706c1 is configured to determine, according to a relative position between at least one slave positioning device and the master positioning device as well as a distance, measured by each slave positioning device, between the device and the object, a circle respectively taking each positioning device as a center and taking a distance, determined by each positioning device, between the device and the object as a radius, and a relative position is provided among circles corresponding to various positioning devices.

The third determining submodule 706c2 is configured to determine, if there is an intersection point created by intersection of more than two circles on the circle corresponding to the master positioning device, the position of the intersection point as a position of the object relative to the master positioning device.

The fourth determining submodule 706c3 is configured to determine, if there is no intersection point created by intersection of more than two circles on the circle corresponding to the master positioning device, at least one intersection point created by intersection between the circle corresponding to the master positioning device and other circles; to determine, if there are two intersection points, arc distance therebetween is less than a predetermined arc threshold, on the circle corresponding to the master positioning device, the position of either of the two intersection points as a position of the object relative to the master positioning device; to determine, if an arc distance between any two intersection points on the circle corresponding to the master positioning device is greater than the predetermined arc threshold, another circle intersecting with the circle corresponding to the master positioning device thus creating an intersection point with respect to intersection points on the circle corresponding to the master positioning device; to detect whether there is an intersection point, an arc between which and the former intersection points is less than the predetermined arc threshold on the another circle; and to determine, if there is such an intersection point on the another circle, the position of the intersection point on the master positioning device as a position of the object relative to the master positioning device.

To sum up, with the object positioning device provided by embodiments of the present disclosure, a beam is transmitted outward with a beam angle of 360°, feedback signal sent by an object is received, and a position of the object relative to the positioning device is determined according to the feedback signal; articles are positioned by means of the positioning device, thus the problem that users need to manually record on a notebook the place for storing articles, which is cumbersome in operation, can be solved, and the effect of improving the convenience and reliability for positioning object can be achieved.

With regard to the device in the above embodiments, detailed description of specific modes for conducting operation of modules has been made in the embodiment related to the method, thus no detailed illustration will be made herein.

The following embodiments are the embodiments of the system in the present disclosure, which may be configured to execute the embodiments of the method in the present disclosure. Please refer to the embodiments of the method in the present disclosure with regard to those details undisclosed by the embodiments of the system in the present disclosure.

Fig. 8 is a block diagram illustrating an object positioning system according to an example. The following part of the description does not describe part of the claimed invention. As shown in Fig. 8, the object positioning system is applied to the implementation environment as shown in Fig. 1. The system includes an object 802 and a positioning device 804.

The object 802 is provided with an electronic tag for receiving a beam sent by the positioning device.

The positioning device 804 may include the object positioning device as depicted in Fig. 5 or Fig. 6.

To sum up, with the object positioning system provided by examples of the present disclosure, a beam is transmitted according to a preset mode, feedback signal sent by an object is received, and a position of the object relative to the positioning device is determined according to the feedback signal; articles are positioned by means of the positioning device, thus the problem that users need to manually record on a notebook the place for storing articles, which is cumbersome in operation, can be solved, and the effect of improving the convenience and reliability for positioning object can be achieved.

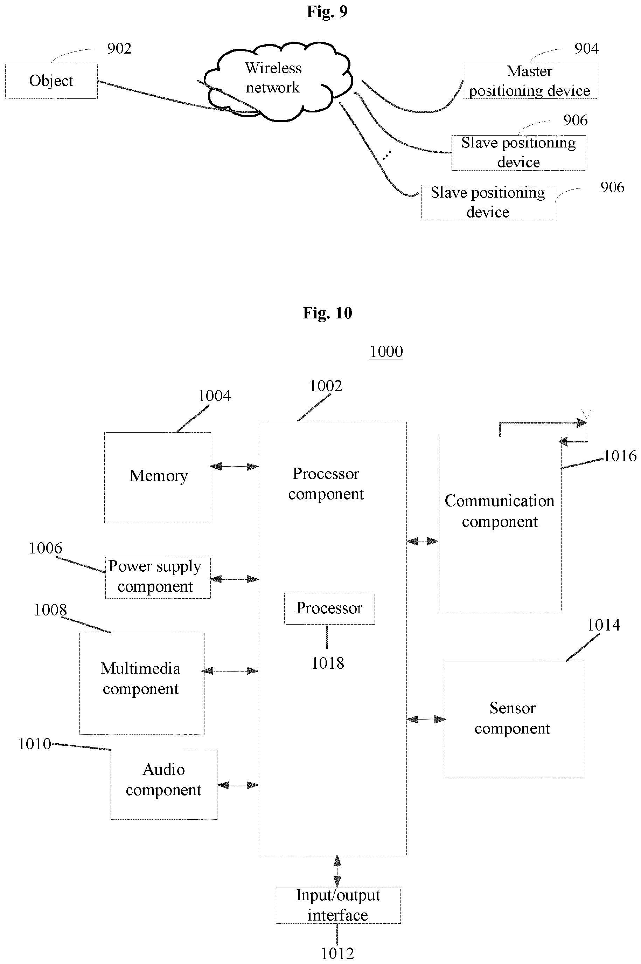

The following part of the description falls again under the scope of the appended claims. Fig. 9 is a block diagram illustrating an object positioning system according to another exemplary embodiment. As shown in Fig. 9, the object positioning system is applied to the implementation environment as shown in Fig. 1. The system includes an object 902, a master positioning device 904 and at least two slave positioning devices 906.

The object 902 is provided with an electronic tag for receiving a beam sent by the positioning device.

The master positioning device 904 may include the object positioning device as depicted in Fig. 5 or Fig. 7. The slave positioning devices 906 are slave positioning devices as depicted in the object positioning device in Fig. 5 or Fig. 7.

To sum up, with the object positioning system provided by embodiments of the present disclosure, a beam is transmitted outward with a beam angle of 360°, feedback signal sent by an object is received, and a position of the object relative to the positioning device is determined according to the feedback signal; articles are positioned by means of the positioning device, thus the problem that users need to manually record on a notebook the place for storing articles, which is cumbersome in operation, can be solved, and the effect of improving the convenience and reliability for positioning object can be achieved.

An exemplary embodiment of the present disclosure provides an object positioning device, which is able to implement the object positioning method provided by the present disclosure. The object positioning device includes: a processor and a memory configured to store processor-executable instructions.

Wherein, the processor is configured to: transmit a beam outward with a beam angle of 360°, receive feedback signal sent by an object, the feedback signal is signal sent by an electronic tag provided on the object after receiving the beam, and the feedback signal is related to intensity of the beam when the electronic tag receives the beam; and determine a position of the object relative to the positioning device according to the feedback signal.

Fig. 10 is a block diagram of a device for object positioning according to an exemplary embodiment. For example, the device 1000 may be a mobile telephone, a computer, a digital broadcasting terminal, a message transceiver device, a game console, a tablet device, a medical device, a fitness facility, a PDA (personal digital assistant) or the like.

Referring to Fig. 10, the device 1000 may include one or a plurality of components as below: a processor component 1002, a memory 1004, a power supply component 1006, a multimedia component 1008, an audio component 1010, an input/output (I/O) interface 1012, a sensor component 1014 and a communication component 1016.

The processor component 1002 generally controls overall operation of the device 1000, such as display, telephone call, data communication, and operation associated with camera operation and record operation. The processor component 1002 may include one or a plurality of processors 1018 for executing instructions so as to complete steps of above method in part or in whole. In addition, the processor component 1002 may include one or a plurality of modules for the purpose of interaction between the processor component 1002 and other components. For example, the processor component 1002 may include a multimedia module for the purpose of interaction between the multimedia component 1008 and the processor component 1002.

The memory 1004 is configured to store various types of data so as to support the operation of the device 1000. Examples of the data include instructions of any application program or approach for operation on the device 1000, contact data, phonebook data, message, picture and video, etc. The memory 1004 may be implemented by any type of volatile or nonvolatile memory device or combination thereof, such as static random access memory (SRAM), electrically erasable programmable read-only memory (EEPROM), erasable programmable read only memory (EPROM), programmable read-only memory (PROM), read-only memory (ROM), magnetic memory, flash memory, magnetic disk or optical disk.

The power supply component 1006 supplies power for various components of the device 1000. The power supply component 1006 may include a power management system, one or a plurality of power supplies, and other components associated with generation, management and distribution of power for the device 1000.

The multimedia component 1008 includes a screen between the device 1000 and a user for providing an output interface. In some embodiments, the screen may include an LCD (Liquid Crystal Display) and a touch panel (TP). If the screen includes a touch panel, the screen may be implemented as a touch screen for receiving input signal from users. The touch panel includes one or a plurality of touch sensors for sensing of touching, sliding and gestures on the touch panel. The touch sensor not only can sensor trip boundary of touching or sliding, but also can detect the duration and pressure related to the touching or sliding operation. In some embodiments, the multimedia component 1008 includes a front-facing camera and/or a rear-facing camera. When the device 1000 is under an operation mode such as capture mode or video mode, the front-facing camera and/or the rear-facing camera may receive external multimedia data. Each of front-facing camera and rear-facing camera may be a fixed optical lens system or may have focal length and optical zoom capacity.

The audio component 1010 is configured to output and/or input audio signal. For example, the audio component 1010 includes a microphone (MIC); when the device 1000 is under an operation mode such as call mode, record mode and speech recognition mode, the microphone is configured to receive external audio signal. The audio signal received may be further stored in the memory 1004 or sent out by the communication component 1016. In some embodiments, the audio component 1010 also includes a loudspeaker for outputting audio signal.

The I/O interface 1012 provides interface between the processor component 1002 and peripheral interface modules, the peripheral interface modules may be a keyboard, a click wheel or buttons, etc. These buttons may include but not limited to: home button, volume button, start button and locking button.

The sensor component 1014 includes one or a plurality of sensors for providing the device 1000 with state evaluation from all aspects. For example, the sensor component 1014 may detect the on/off state of the device 1000, relative positioning of components, for example, the components include the displayer and keypads of the device 1000; the sensor component 1014 may also detect the position change of the device 1000 or a component thereof, the presence or absence of users' touch on the device 1000, the direction or acceleration/deceleration of the device 1000, and temperature variation of the device 1000. The sensor component 1014 may also include a proximity detector, which is configured to detect the presence of nearby objects without physical touch. The sensor component 1014 may also include an optical sensor such as CMOS or CCD image sensor for imaging application. In some embodiments, the sensor component 1014 may also include an acceleration sensor, a gyro sensor, a magnetic sensor, a pressure sensor, or a temperature sensor.

The communication component 1016 is configured to facilitate wired communication or wireless communication between the device 1000 and other equipments. The device 1000 is available for access to wireless network based on communication standards, for example, WiFi, 2G or 3G, or combination thereof. In an exemplary embodiment, the communication component 1016 receives by means of a broadcast channel the broadcast signal or broadcast-related information from external broadcast management systems. In an exemplary embodiment, the communication component 1016 also includes a near field communication (NFC) module for promoting short-range communication. For example, the NFC module may be implemented on the basis of Radio Frequency Identification (RFID) Technology, Infrared Data Association (IrDA) Technology, Ultra-wide Bandwidth (UWB) Technology, Bluetooth (BT) Technology and other technologies.

In exemplary embodiments, the device 1000 may be implemented by one or a plurality of application specific integrated circuits (ASIC), digital signal processors (DSP), digital signal processing devices (DSPD), programmable logic devices (PLD), field programmable gate arrays (FPGA), controllers, microcontrollers, microprocessors or other electronic components, configured to execute the above object positioning method.

In exemplary embodiments, a non-transitory computer-readable storage medium including instructions is also provided, for example, a memory 1004 including instructions, which may be executed by the processor 1018 of the device 1000 so as to implement the above object positioning method. For example, the non-transitory computer-readable storage medium may be ROM, random access memory (RAM), CD-ROM, a magnetic tape, a floppy disk and an optical data storage device, etc.

Other embodiments of the invention will be apparent to those skilled in the art from consideration of the specification and practice of the invention disclosed here. This application is intended to cover any variations, uses, or adaptations of the invention. It is intended that the specification and examples be considered as exemplary only, with the invention only being limited by the attached claims.

## Claims

1. An object positioning method, wherein the method is applied to a master positioning device in a system of a master positioning device and at least two slave positioning devices, and comprises:
transmitting (201) a beam outward with a beam angle of 360°;
receiving (202) a feedback signal sent from an object, the feedback signal being signal sent from an electronic tag provided on the object after receiving the beam, and the feedback signal being related to intensity of the beam when the electronic tag receives the beam; and
determining a position of the object (902) relative to the positioning device (904, 906) according to the feedback signal comprising:
calculating (403) a distance between the object (902) and the master positioning device (904) according to beam intensity relating to the feedback signal;
receiving (404) a distance, which is sent from each of at least two slave positioning devices (906), between the object (902) and the slave positioning device (906); and
calculating a position of the object relative to the master positioning device (904) according to a relative position between each of the at least two slave positioning devices (906) and the master positioning device (904) as well as a distance, which is measured from each slave positioning device (906), between the slave positioning device (906) and the object (902), by:
determining (405) a circle for each of the master (904) and at least two slave positioning devices (906) respectively by taking each positioning device (904, 906) as a center and taking the distance, determined by each positioning device (904, 906), between the positioning device (904, 906) and the object (902) as a radius;
determining (406), according to the relative position between the at least two slave positioning devices (906) and the master positioning device (904) as well as the distance, measured by each slave positioning device (906), between the slave positioning device (906) and the object (902), one or more intersection points on the master positioning device (904) circle;
a) taking, if there is an intersection point on the master positioning device (904) circle, created by the intersection of at least two slave positioning device (906) circles, the position of the intersection point as the position of the object (902) relative to the master positioning device (904);
the method **characterized in that** it further comprises:
b) determining (407), if there is no intersection point on the master positioning device (904) circle created by the intersection of at least two slave positioning device (906) circles, at least two intersection points created by the intersection of the master positioning device (904) circle and at least one of the at least two slave positioning device (906) circles;
c) taking, if there are such two intersection points, and the arc distance on the master positioning device (904) circle between the two intersection points is less than a predetermined arc threshold, a position of either of the two intersection points as the position of the object relative to the master positioning device (904);
d) determining, if there are two such intersection points, and the arc distance on the master positioning device (904) circle is greater than the predetermined arc threshold, that there is a first slave positioning device (906) circle intersecting with the master positioning device (904) circle, and a second slave positioning device (906) circle not intersecting with the master positioning device (904) circle;
e) detecting whether there is an intersection point between the first and second slave positioning device (906) circles, such that an arc between the intersection point on the first and second slave positioning device (906) circles and the intersection point on the master positioning device (904) circle is less than the predetermined arc threshold; and determining, if there is such an intersection point, the position of the intersection point on the circle of the master positioning device (904) as the position of the object (902) relative to the master positioning device (904).

2. An object positioning device, wherein the device is a master positioning device in a system of a master positioning device and at least two slave positioning devices, and comprises:
a transmitting module (502, 602, 702), configured to transmit a beam outward with a beam angle of 360°;
a receiving module (504, 604, 704), configured to receive feedback signal sent from an object, the feedback signal being signal sent from an electronic tag provided on the object after receiving the beam, and the feedback signal being related to intensity of the beam when the electronic tag receives the beam; and
a determining module (506, 606, 706), configured to determine a position of the object relative to the positioning device according to the feedback signal;
the determining module (706) comprising:
a second calculating submodule (706a), configured to calculate a distance between the object (902) and the master positioning device (904) according to beam intensity relating to the feedback signal;
a receiving submodule (706b), configured to receive from each of at least two slave positioning devices (906), a distance between the object (902) and the slave positioning device (906); and
a third calculating submodule (706c), configured to calculate a position of the object (902) relative to the master positioning device (904) according to a relative position between each of the at least two slave positioning devices (906) and the master positioning device (904) as well as a distance, which is measured from each slave positioning device (906), between the slave positioning device (906) and the object (902); and wherein:
the third calculating submodule (706c) comprises:
a second determining submodule (706c1), configured to determine a circle for each of the master (904) and at least two slave positioning devices (906) respectively by taking each positioning device (904, 906) as a center and taking the distance, determined by each positioning device (904, 906), between the positioning device (904, 906) and the object (902) as a radius;
determining (406), according to the relative position between the at least two slave positioning devices (906) and the master positioning device (904) as well as the distance, measured by each slave positioning device (906), between the slave positioning device (906) and the object (902), one or more intersection points on the master positioning device (904) circle;
a) a third determining submodule (706c2), configured to take, if there is an intersection point on the master positioning device (904) circle, created by the intersection of at least two slave positioning device (906) circles, the position of the intersection point as the position of the object (902) relative to the master positioning device (904);
the device **characterized in that** it further comprises: a fourth determining submodule (706c3), configured to:
b) determine (407), if there is no intersection point on the master positioning device (904) circle created by the intersection of at least two slave positioning device (906) circles, at least two intersection points created by the intersection of the master positioning device (904) circle and at least one of the at least two slave positioning device (906) circles;
c) take, if there are such two intersection points, and the arc distance on the master positioning device (904) circle between the two intersection points is less than a predetermined arc threshold, a position of either of the two intersection points as the position of the object relative to the master positioning device (904);
d) determine, if there are two such intersection points, and the arc distance on the master positioning device (904) circle is greater than the predetermined arc threshold, that there is a first slave positioning device (906) circle intersecting with the master positioning device (904) circle, and a second slave positioning device (906) circle not intersecting with the master positioning device (904) circle,
e) detect whether there is an intersection point between the first and second slave positioning device (906) circles, such that an arc between the intersection point on the first and second slave positioning device (906) circles and the intersection point on the master positioning device (904) circle is less than the predetermined arc threshold; and determining, if there is such an intersection point, the position of the intersection point on the circle of the master positioning device (904) as the position of the object (902) relative to the master positioning device (904).

3. An object positioning system, wherein the system comprises an object (902), a master positioning device (904) and at least two slave positioning devices (906), the object being provided with an electronic tag for receiving a beam sent from the positioning device, the system **characterized in that** the master positioning device is the object positioning device according to claim 2.

4. A computer program which, when executed on a processor of an apparatus, performs the method of claim 1.

## Patentansprüche

1. Objektpositionierungsverfahren, wobei das Verfahren auf eine Master-Positionierungsvorrichtung in einem System aus einer Master-Positionierungsvorrichung und wenigstens zwei Slave-Positionierungsvorrichtungen angewendet wird und Folgendes beinhaltet:
Aussenden (201) eines Strahls mit einem Strahlwinkel von 360°;
Empfangen (202) eines von einem Objekt gesendeten Feedback-Signals, wobei das Feedback-Signal ein Signal ist, das von einem auf dem Objekt nach dem Empfangen des Strahls bereitgestellten elektronischen Tag gesendet wird, und wobei sich das Feedback-Signal auf Intensität des Strahls bezieht, wenn das elektronische Tag den Strahl empfängt; und
Bestimmen einer Position des Objekts (902) relativ zu der Positionierungsvorrichtung (904, 906) gemäß dem Feedback-Signal, das Folgendes beinhaltet:
Berechnen (403) einer Distanz zwischen dem Objekt (902) und der Master-Positionierungsvorrichtung (904) gemäß Strahlintensität in Bezug auf das Feedback-Signal;
Empfangen (404) einer von jeder von wenigstens zwei Slave-Positionierungsvorrichtungen (906) gesendeten Distanz zwischen dem Objekt (902) und der Slave-Positionierungsvorrichtung (906); und
Berechnen einer Position des Objekts relativ zur Master-Positionierungsvorrichtung (904) gemäß einer relativen Position jeweils zwischen den wenigstens zwei Slave-Positionierungsvorrichtungen (906) und der Master-Positionierungsvorrichtung (904) sowie einer von jeder Slave-Positionierungsvorrichtung (906) gemessenen Distanz zwischen der Slave-Positionierungsvorrichtung (906) und dem Objekt (902), durch:
Bestimmen (405) eines Kreises für jede aus der Master- (904) und wenigstens zwei Slave-Positionierungsvorrichtungen (906), wobei jede Positionierungsvorrichtung (904, 906) jeweils als Mittelpunkt und die von jeder Positionierungsvorrichtung (904, 906) ermittelte Distanz zwischen der Positionierungsvorrichtung (904, 906) und dem Objekt (902) als Radius genommen wird;
Bestimmen (406), gemäß der relativen Position zwischen den wenigstens zwei Slave-Positionierungsvorrichtungen (906) und der Master-Positionierungsvorrichtung (904) sowie der von jeder Slave-Positionierungsvorrichtung (906) gemessenen Distanz zwischen der Slave-Positionierungsvorrichtung (906) und dem Objekt (902), von einem oder mehreren Schnittpunkten auf dem Kreis der Master-Positionierungsvorrichtung (904);
a) Nehmen, wenn es einen Schnittpunkt auf dem Kreis der Master-Positionierungsvorrichtung (904) gibt, erzeugt durch das Schneiden der Kreise von wenigstens zwei Slave-Positionierungsvorrichtung (906), der Position des Schnittpunkts als die Position des Objekts (902) relativ zur Master-Positionierungsvorrichtung (904);
wobei das Verfahren **dadurch gekennzeichnet ist, dass** es ferner Folgendes beinhaltet:
b) Bestimmen (407), wenn es keinen Schnittpunkt auf dem Kreis der Master-Positionierungsvorrichtung (904) gibt, erzeugt durch das Schneiden der Kreise von wenigstens zwei Slave-Positionierungsvorrichtungen (906), von wenigstens zwei Schnittpunkten, erzeugt durch das Schneiden des Kreises der Master-Positionierungsvorrichtung (904) und von wenigstens einem der Kreise der wenigstens zwei Slave-Positionierungsvorrichtungen (906);
c) Nehmen, wenn es solche zwei Schnittpunkte gibt und die Bogendistanz auf dem Kreis der Master-Positionierungsvorrichtung (904) zwischen den beiden Schnittpunkten kleiner ist als eine vorbestimmte Bogenschwelle, einer Position von einem der beiden Schnittpunkte als die Position des Objekts relativ zur Master-Positionierungsvorrichtung (904);
d) Feststellen, wenn es zwei solche Schnittpunkte gibt und die Bogendistanz auf dem Kreis der Master-Positionierungsvorrichtung (904) größer ist als die vorbestimmte Bogenschwelle, dass es einen Kreis der ersten Slave-Positionierungsvorrichtung (906) gibt, der den Kreis der Master-Positionierungsvorrichtung (904) schneidet, und einen Kreis der zweiten Slave-Positionierungsvorrichtung (906), der den Kreis der Master-Positionierungsvorrichtung (904) nicht schneidet;
e) Erkennen, ob es einen Schnittpunkt zwischen den Kreisen der ersten und zweiten Slave-Positionierungsvorrichtung (906) gibt, so dass ein Bogen zwischen dem Schnittpunkt auf den Kreisen der ersten und zweiten Slave-Positionierungsvorrichtung (906) und dem Schnittpunkt auf dem Kreis der Master-Positionierungsvorrichtung (904) kleiner ist als die vorbestimmte Bogenschwelle; und Feststellen, wenn es einen solchen Schnittpunkt gibt, der Position des Schnittpunkts auf dem Kreis der Master-Positionierungsvorrichtung (904) als die Position des Objekts (902) relativ zur Master-Positionierungsvorrichtung (904).

2. Objektpositionierungsvorrichtung, wobei die Vorrichtung eine Master-Positionierungsvorrichtung in einem System aus einer Master-Positionierungsvorrichtung und wenigstens zwei Slave-Positionierungsvorrichtungen ist und Folgendes umfasst:
ein Sendemodul (502, 602, 702), konfiguriert zum Aussenden eines Strahls mit einem Strahlwinkel von 360°;
ein Empfangsmodul (504, 604, 704), konfiguriert zum Empfangen eines von einem Objekt gesendeten Feedback-Signals, wobei das Feedback-Signal ein auf dem Objekt nach dem Empfangen des Strahls bereitgestelltes Signal ist, das von einem elektronischen Tag gesendet wird, und wobei sich das Feedback-Signal auf Intensität des Strahls bezieht, wenn das elektronische Tag den Strahl empfängt; und
ein Bestimmungsmodul (506, 606, 706), konfiguriert zum Bestimmen einer Position des Objekts relativ zu der Positionierungsvorrichtung gemäß dem Feedback-Signal;
wobei das Bestimmungsmodul (706) Folgendes umfasst:
ein zweites Rechensubmodul (706a), konfiguriert zum Berechnen einer Distanz zwischen dem Objekt (902) und der Master-Positionierungsvorrichtung (904) gemäß Strahlintensität in Bezug auf das Feedback-Signal;
ein Empfangssubmodul (706b), konfiguriert zum Empfangen, von jeder von wenigstens zwei Slave-Positionierungsvorrichtungen (906), einer Distanz zwischen dem Objekt (902) und der Slave-Positionierungsvorrichtung (906); und
ein drittes Rechensubmodul (706c), konfiguriert zum Berechnen einer Position des Objekts (902) relativ zur Master-Positionierungsvorrichtung (904) gemäß einer relativen Position zwischen jeder der wenigstens zwei Slave-Positionierungsvorrichtungen (906) und der Master-Positionierungsvorrichtung (904) sowie einer von jeder Slave-Positionierungsvorrichtung (906) gemessenen Distanz zwischen der Slave-Positionierungsvorrichtung (906) und dem Objekt (902); und wobei:
das dritte Rechensubmodul (706c) Folgendes umfasst:
ein zweites Bestimmungssubmodul (796c1), konfiguriert zum Bestimmen eines Kreises für jede aus der Master- (904) und wenigstens zwei Slave-Positionierungsvorrichtungen (906), jeweils durch Nehmen jeder Positionierungsvorrichtung (904, 906) als Mittelpunkt und Nehmen der von jeder Positionierungsvorrichtung (904, 906) bestimmten Distanz zwischen der Positionierungsvorrichtung (904, 906) und dem Objekt (902) als Radius;
Bestimmen (406), gemäß der relativen Position zwischen den wenigstens zwei Slave-Positionierungsvorrichtungen (906) und der Master-Positionierungsvorrichtung (904) als Distanz, gemessen von jeder Slave-Positionierungsvorrichtung (906), zwischen der Slave-Positionierungsvorrichtung (906) und dem Objekt (902), von einem oder mehreren Schnittpunkten auf dem Kreis der Master-Positionierungsvorrichtung (904);
a) ein drittes Bestimmungssubmodul (706c2), konfiguriert zum Nehmen, wenn es einen Schnittpunkt auf dem Kreis der Master-Positionierungsvorrichtung (904) gibt, erzeugt durch das Schneiden der Kreise von wenigstens zwei Slave-Positionierungsvorrichtungen (906), der Position des Schnittpunkts als Position des Objekts (902) relativ zur Master-Positionierungsvorrichtung (904);
wobei die Vorrichtung **dadurch gekennzeichnet ist, dass** sie ferner Folgendes umfasst:
ein viertes Bestimmungssubmodul (706c3), konfiguriert zum:
b) Bestimmen (407), wenn es keinen Schnittpunkt auf dem Kreis der Master-Positionierungsvorrichtung (904) gibt, erzeugt durch das Schneiden der Kreise von wenigstens zwei Slave-Positionierungsvorrichtungen (906), von wenigstens zwei Schnittpunkten, erzeugt durch das Schneiden des Kreises der Master-Positionierungsvorrichtung (904) und von wenigstens einem der Kreise der wenigstens zwei Slave-Positionierungsvorrichtungen (906);
c) Nehmen, wenn es solche zwei Schnittpunkte gibt und die Bogendistanz auf dem Kreis der Master-Positionierungsvorrichtung (904) zwischen den beiden Schnittpunkten kleiner ist als eine vorbestimmte Bogenschwelle, einer Position von einem der beiden Schnittpunkte als die Position des Objekts relativ zur Master-Positionierungsvorrichtung (904);
d) Feststellen, wenn es zwei solche Schnittpunkte gibt und die Bogendistanz auf dem Kreis der Master-Positionierungsvorrichtung (904) größer ist als die vorbestimmte Bogenschwelle, dass es einen Kreis der ersten Slave-Positionierungsvorrichtung (906) gibt, der den Kreis der Master-Positionierungsvorrichtung (904) schneidet, und einen Kreis der zweiten Slave-Positionierungsvorrichtung (906), der den Kreis der Master-Positionierungsvorrichtung (904) nicht schneidet;
e) Erkennen, ob es einen Schnittpunkt zwischen den Kreisen der ersten und zweiten Slave-Positionierungsvorrichtung (906) gibt, so dass ein Bogen zwischen dem Schnittpunkt auf den Kreisen der ersten und zweiten Slave-Positionierungsvorrichtung (906) und dem Schnittpunkt auf dem Kreis der Master-Positionierungsvorrichtung (904) kleiner ist als die vorbestimmte Bogenschwelle; und Feststellen, wenn es einen solchen Schnittpunkt gibt, der Position des Schnittpunkts auf dem Kreis der Master-Positionierungsvorrichtung (904) als die Position des Objekts (902) relativ zur Master-Positionierungsvorrichtung (904).

3. Objektpositionierungssystem, wobei das System ein Objekt (902), eine Master-Positionierungsvorrichtung (904) und wenigstens zwei Slave-Positionierungsvorrichtungen (906) umfasst, wobei das Objekt mit einem elektronischen Tag zum Empfangen eines von der Positionierungsvorrichtung gesendeten Strahls versehen ist, wobei das System **dadurch gekennzeichnet ist, dass** die Master-Positionierungsvorrichtung die Objektpositionierungsvorrichtung nach Anspruch 2 ist.

4. Computerprogramm, das bei Ausführung auf einem Prozessor einer Vorrichtung das Verfahren nach Anspruch 1 durchführt.

## Revendications

1. Procédé de positionnement d'objet, où le procédé est appliqué à un dispositif de positionnement maître dans un système consistant en un dispositif de positionnement maître et en au moins deux dispositifs de positionnement asservis, et comprend :
émettre (201) un faisceau sortant ayant un angle de faisceau de 360 ° ;
recevoir (202) un signal de réaction envoyé d'un objet, le signal de réaction étant envoyé d'une étiquette électronique fournie sur l'objet après avoir reçu le faisceau, et le signal de réaction étant associé à l'intensité du faisceau lorsque l'étiquette électronique reçoit le faisceau ; et
déterminer une position de l'objet (902) par rapport au dispositif de positionnement (904, 906) conformément au signal de réaction comprenant :
calculer (403) une distance entre l'objet (902) et le dispositif de positionnement maître (904) conformément à l'intensité du faisceau associée au signal de réaction ;
recevoir (404) une distance, qui est envoyée de chacun d'au moins deux dispositifs de positionnement asservis (906), entre l'objet (902) et le dispositif de positionnement asservi (906) ; et
calculer une position de l'objet par rapport au dispositif de positionnement maître (904) conformément à une position relative entre chacun des au moins deux dispositifs de positionnement asservis (906) et le dispositif de positionnement maître (904) ainsi qu'une distance, qui est mesurée de chaque dispositif de positionnement asservi (906), entre de dispositif de positionnement asservi (906) et l'objet (902), en :
déterminant (405) un cercle pour chacun du dispositif de positionnement maître (904) et d'au moins deux dispositifs de positionnement asservis (906) respectivement, en prenant chaque dispositif de positionnement (904, 906) comme un centre et en prenant la distance, déterminée par chaque dispositif de positionnement (904, 906), entre le dispositif de positionnement (904, 906) et l'objet (902) comme un rayon ;
déterminant (406), conformément à la position relative entre les au moins deux dispositifs de positionnement asservis (906) et le dispositif de positionnement maître (904) ainsi que la distance, mesurée par chaque dispositif de positionnement asservi (906), entre le dispositif de positionnement asservi (906) et l'objet (902), un ou plusieurs points d'intersection sur le cercle du dispositif de positionnement maître (904) ;
a) prendre, s'il y a un point d'intersection sur le cercle du dispositif de positionnement maître (904), créé par l'intersection d'au moins deux cercles des dispositifs de positionnement asservis (906), la position du point d'intersection comme la position de l'objet (902) par rapport au dispositif de positionnement maître (904) ;
le procédé étant **caractérisé en ce qu'**il comprend en outre :
b) déterminer (407), s'il n'y a pas de point d'intersection sur le cercle du dispositif de positionnement maître (904) créé par l'intersection d'au moins deux cercles des dispositifs de positionnement asservis (906), au moins deux points d'intersection créés par l'intersection du cercle du dispositif de positionnement maître (904) et au moins l'un des aux moins deux cercles des dispositifs de positionnement asservis (906) ;
c) prendre, s'il n'y a pas deux tels points d'intersection et si la distance de l'arc sur le cercle du dispositif de positionnement maître (904) entre les deux points d'intersection est moindre qu'un seuil d'arc prédéterminé, une position de l'un ou l'autre des deux points d'intersection comme la position de l'objet par rapport au dispositif de positionnement maître (904) ;
d) déterminer, s'il y a deux tels points d'intersection et si la distance de l'arc sur le cercle du dispositif de positionnement maître (904) est plus grande que le seuil d'arc prédéterminé, qu'il y a un premier cercle de dispositif de positionnement asservi (906) entrecroisant le cercle du dispositif de positionnement maître (904), et un deuxième cercle de dispositif de positionnement asservi (906) n'entrecroisant pas le cercle du dispositif de positionnement maître (904) ;
e) détecter s'il y a un point d'intersection entre le premier et le deuxième cercles des dispositifs de positionnement asservis (906), de telle sorte qu'un arc entre le point d'intersection sur le premier et le deuxième cercle des dispositifs de positionnement asservis (906) et le point d'intersection sur le cercle du dispositif de positionnement maître (904) est moindre que le seuil d'arc prédéterminé, et déterminer, s'il y a un tel point d'intersection, la position du point d'intersection sur le cercle du dispositif de positionnement maître (904) comme la position de l'objet (902) par rapport au dispositif de positionnement maître (904).

2. Dispositif de positionnement d'objet, où le dispositif est un dispositif de positionnement maître dans un système consistant en un dispositif de positionnement maître et en au moins deux dispositifs de positionnement asservis, et comprend :
un module d'émission (502, 602, 702), configuré pour émettre un faisceau sortant ayant un angle de faisceau de 360 ° ;
un module de réception (504, 604, 704), configuré pour recevoir un signal de réaction envoyé d'un objet, le signal de réaction étant envoyé d'une étiquette électronique fournie sur l'objet après avoir reçu le faisceau, et le signal de réaction étant associé à l'intensité du faisceau lorsque l'étiquette électronique reçoit le faisceau ; et
un module de détermination (506, 606, 706), configuré pour déterminer une position de l'objet par rapport au dispositif de positionnement conformément au signal de réaction
le module de détermination (706) comprenant :
un deuxième sous-module de calcul (706a), configuré pour calculer une distance entre l'objet (902) et le dispositif de positionnement maître (904) conformément à l'intensité du faisceau associée au signal de réaction ;
un sous-module de réception (706b), configuré pour recevoir de chacun d'au moins deux dispositifs de positionnement asservis (906), une distance entre l'objet (902) et le dispositif de positionnement asservi (906) ; et
un troisième sous-module de calcul (706c), configuré pour calculer une position de l'objet (902) par rapport au dispositif de positionnement maître (904) conformément à une position relative entre chacun des au moins deux dispositifs de positionnement asservis (906) et le dispositif de positionnement maître (904) ainsi qu'une distance, qui est mesurée de chaque dispositif de positionnement asservi (906), entre de dispositif de positionnement asservi (906) et l'objet (902), et dans lequel :
le troisième sous-module de calcul (706c) comprend :
un deuxième sous-module de détermination (706c1), configuré pour déterminer un cercle pour chacun du dispositif de positionnement maître (904) et d'au moins deux dispositifs de positionnement asservis (906) respectivement, en prenant chaque dispositif de positionnement (904, 906) comme un centre et prendre la distance, déterminée par chaque dispositif de positionnement (904, 906), entre le dispositif de positionnement (904, 906) et l'objet (902) comme un rayon ;
déterminer (406), conformément à la position relative entre les au moins deux dispositifs de positionnement asservis (906) et le dispositif de positionnement maître (904) ainsi que la distance, mesurée par chaque dispositif de positionnement asservi (906), entre le dispositif de positionnement asservi (906) et l'objet (902), un ou plusieurs points d'intersection sur le cercle du dispositif de positionnement maître (904);
a) un troisième sous-module de détermination (706c2), configuré pour prendre, s'il y a un point d'intersection sur le cercle du dispositif de positionnement maître (904), créé par l'intersection d'au moins deux cercles des dispositifs de positionnement asservis (906), la position du point d'intersection comme la position de l'objet (902) par rapport au dispositif de positionnement maître (904) ;
le dispositif étant **caractérisé en ce qu'**il comprend en outre :
un quatrième sous-module de détermination (706c3) configuré pour :
b) déterminer (407), s'il n'y a pas de point d'intersection sur le cercle du dispositif de positionnement maître (904) créé par l'intersection d'au moins deux cercles des dispositifs de positionnement asservis (906), au moins deux points d'intersection créés par l'intersection du cercle du dispositif de positionnement maître (904) et au moins l'un des aux moins deux cercles des dispositifs de positionnement asservis (906) ;
c) prendre, s'il n'y a pas deux tels points d'intersection et si la distance de l'arc sur le cercle du dispositif de positionnement maître (904) entre les deux points d'intersection est moindre qu'un seuil d'arc prédéterminé, une position de l'un ou l'autre des deux points d'intersection comme la position de l'objet par rapport au dispositif de positionnement maître (904) ;
d) déterminer, s'il y a deux tels points d'intersection et si la distance de l'arc sur le cercle du dispositif de positionnement maître (904) est plus grande que le seuil d'arc prédéterminé, qu'il y a un premier cercle de dispositif de positionnement asservi (906) entrecroisant le cercle du dispositif de positionnement maître (904), et un deuxième cercle de dispositif de positionnement asservi (906) n'entrecroisant pas le cercle du dispositif de positionnement maître (904) ;
e) détecter s'il y a un point d'intersection entre le premier et le deuxième cercles des dispositifs de positionnement asservis (906), de telle sorte qu'un arc entre le point d'intersection sur le premier et le deuxième cercle des dispositifs de positionnement asservis (906) et le point d'intersection sur le cercle du dispositif de positionnement maître (904) est moindre que le seuil d'arc prédéterminé, et déterminer, s'il y a un tel point d'intersection, la position du point d'intersection sur le cercle du dispositif de positionnement maître (904) comme la position de l'objet (902) par rapport au dispositif de positionnement maître (904).

3. Système de positionnement d'objet, où le système comprend un objet (902), un dispositif de positionnement maître (904) et au moins deux dispositifs de positionnement asservis (906), l'objet étant pourvu d'une étiquette électronique pour recevoir un faisceau émis du dispositif de positionnement, le système étant **caractérisé en ce que** le dispositif de positionnement maître est le dispositif de positionnement d'objet selon la revendication 2.

4. Programme informatique qui, lorsque exécuté sur un processeur d'un appareil, met en oeuvre le procédé selon la revendication 1.
